# FASCICULE DE BREVET EUROPEEN

(11) **EP 2 142 049 B1**
(45) Date de publication et mention de la délivrance du brevet: **27.10.2010**
(21) Numéro de dépôt: 08787955.7
(22) Date de dépôt: 15.04.2008
(51) Int. Cl.: A47D 7/04

(54) **BERCEAU ADAPTABLE À UN SIÈGE D'AVION**
AN EINEN FLUGZEUGSITZ ANPASSBARE WIEGE
CRADLE ADAPTABLE TO AN AIRCRAFT SEAT

(30) Priorité: 16.04.2007 FR 0702728
(43) Date de publication de la demande: 13.01.2010
(73) Titulaire: TMC Holding, 75011 Paris (FR)
(72) Inventeur: NEGRE, Gilles, F-60330 Le Plessis-Belleville (FR)
(74) Mandataire: Bonneau, Gérard
(86) Numéro de dépôt international: PCT/FR2008/000522
(87) Numéro de publication internationale: WO 2008/142294

(56) Documents cités:
- DE-B- 1 079 292
- US-A- 1 885 493
- US-A- 2 724 427

## Description

### Domaine technique

La présente invention concerne les sièges et couchettes adaptés pour les enfants voyageant dans un avion et concerne en particulier un berceau adaptable en siège pour avion (voir le document DE-B-1079292).

### Etat de la technique

Aujourd'hui les enfants qui voyagent dans un avion se répartissent en deux catégories. Les enfants en bas âge tels que les bébés de moins de 6 mois accompagnés de leur mère, bénéficient, dans les avions long courrier, de berceaux qui se fixent sur les coffres à bagages ou sur les parois verticales en avant de l'appareil ou sur chacune des parois de séparation des compartiments de la cabine. Par contre, les enfants de plus de 2 ans, généralement accompagnés, sont admis à occuper un siège comme tout autre passager.

Lorsqu'un enfant a un âge compris entre 6 mois et 2 ans, c' est dire lorsqu'il a un âge lui permettant de se tenir en position assise, rien n'est prévu dans les avions en dehors des berceaux pour enfants en bas âge. Comme il s'agit de voyages de longue durée, il est impossible de demander à un enfant de cet âge d'être toujours allongé dans le berceau mis à sa disposition. Dans ce cas, la mère ou l'accompagnateur de l'enfant n'a pas d'autre solution que de prendre l'enfant sur ses genoux en position assise, avec la fatigue et l'inconfort que cela représente, aussi bien pour l'enfant que pour la personne ayant l'enfant sur ses genoux.

### Exposé de l'invention

C'est pourquoi le but de l'invention est de fournir un berceau pour cabine passagers d'avion qui est adapté pour que l'enfant puisse être en position assise.

L'objet de l'invention est donc un berceau pour cabine passagers d'avion adapté pour un enfant de moins de 2 ans capable de se tenir assis, comprenant une armature rigide et repliable formée d'un cadre rectangulaire et de deux montants et adaptée pour être fixée à une paroi de la cabine et une housse avec matelas fixée au cadre rectangulaire. La housse comporte dans un de ses flancs longitudinaux deux fenêtres séparées par une bande de tissu et bouchées par un volet escamotable en tissu de manière à permettre à l'enfant de se tenir assis dans le berceau en ayant les jambes à l'extérieur du berceau à travers les fenêtres et de part et d'autre de la bande de tissu lorsque le volet a été escamoté.

### Description brève des figures

Les buts, objets et caractéristiques de l'invention apparaîtront plus clairement à la lecture de la description qui suit faite en référence aux dessins dans lesquels :
la figure 1 représente une vue de face du berceau selon l'invention fixé à une paroi de l'avion ;
la figure 2 représente une vue en perspective du berceau représenté sur la figure 1 ;
la figure 3 représente une vue de l'intérieur de la cabine montrant le berceau fixé sur la paroi en avant de la rangée de sièges ;
la figure 4 représente une vue prise de l'intérieur du berceau montrant les deux fenêtres séparées par une bande de tissu et le volet en tulle devant les fenêtres ;
la figure 5 représente la même vue que précédemment lorsque le volet en tulle a été escamoté de façon à permettre au bébé de passer ses jambes à travers les fenêtres ;
la figure 6 représente une vue en perspective du berceau dans lequel le bébé est en position assise de face ; et
la figure 7 représente l'arrière du bébé en position assise dans le berceau montrant le cylindre en élastomère se trouvant devant lui ainsi que les sangles attachées derrière son dos.

### Description détaillée de l'invention

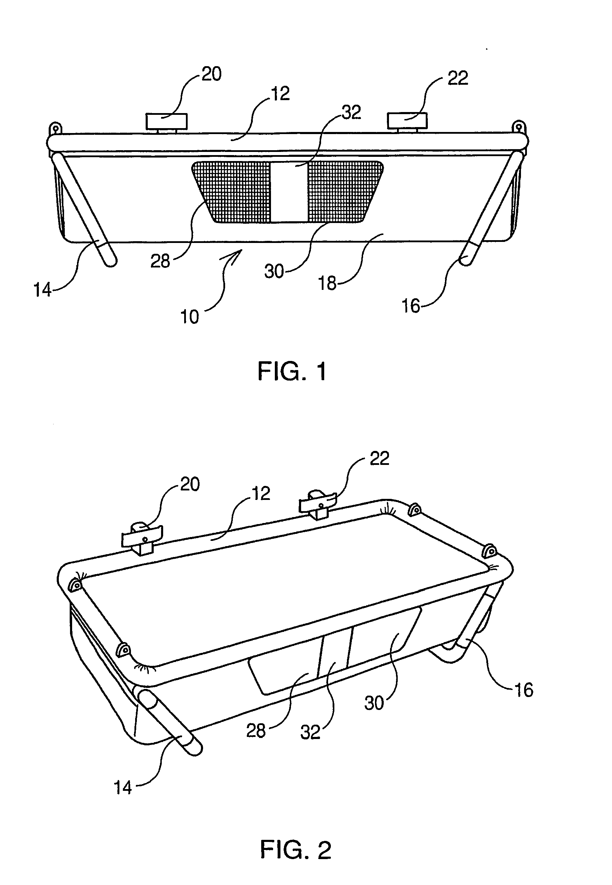

En référence aux figures 1 et 2, le berceau 10 selon l'invention d'une longueur comprise entre 70 cm et 80 cm et d'une largeur comprise entre 35 cm et 40 cm est formé d'une armature composée d'un cadre rectangulaire 12 et de deux montants 14 et 16, et d'une housse en tissu 18 fixée à l'armature par recouvrement des 4 parties du cadre rectangulaire 12. Les deux montants 14 et 16 sont légèrement inclinés vers l'intérieur et sont ainsi facilement repliables lorsque le berceau n'est pas utilisé.

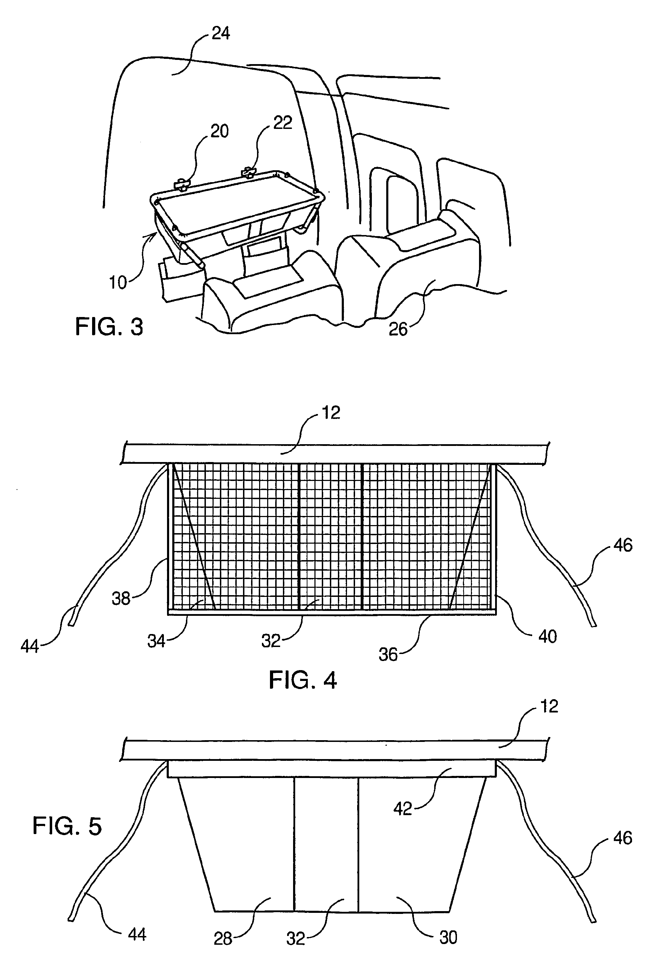

Une fois monté, le berceau 10 est fixé à une paroi verticale par deux pattes de fixation 20 et 22. Comme le montre la figure 3, la paroi 24 sur laquelle est fixé le berceau est de préférence la paroi située à l'avant de la cabine passagers, la mère ou l'accompagnateur du bébé étant assis sur la siège 26 de la première rangée. A noter que la paroi 24 sur laquelle est fixé le berceau pourrait être tout autre paroi verticale séparant deux compartiments de la cabine, par exemple le compartiment de la classe affaires et le compartiment de la classe tourisme.

Comme on le voit sur les figures 1 et 2, le flanc longitudinal avant de la housse comporte deux fenêtres 28 et 30 séparées par une bande de tissu 32. Comme on le verra par la suite, les deux fenêtres sont utilisées pour y faire passer les jambes du bébé en position assise. A noter que les deux fenêtres 28 et 30 ne s'étendent pas jusqu'en bas de la housse du fait qu'un matelas d'une épaisseur d'environ 3 cm est installé sur le fond de la housse.

Les deux fenêtres 28 et 30 sont de préférence en forme de trapèze, la base la plus étroite étant dans la partie basse. Ainsi, les jambes du bébé sont retenues latéralement tout en ayant la possibilité de bouger.

Lorsque le bébé est couché dans son berceau, un volet ou rideau en tissu est placé devant les fenêtres. Comme le montre la figure 4 dans laquelle les fenêtres sont vues de l'intérieur du berceau, le volet en tissu 34 est fixé au cadre 12. Le volet a de préférence une forme rectangulaire et est en tissu transparent, de préférence en tulle, ce qui permet à la maman du bébé de pouvoir observer le bébé couché dans le berceau se trouvant devant ses yeux.

Le volet 34 comporte dans sa partie basse et sur toute sa longueur un boudin 36, de préférence en matériau élastomère, d'un diamètre d'environ 2 cm. Sur chacun des deux côtés verticaux, le volet comporte une bande auto-agrippante 38 et 40 ou bande Velcro (marque déposée) à double face, c'est-à-dire ayant une couche « crochet » sur la face avant et une couche « velours » sur la face arrière ou l'inverse. Lorsque le bébé désire être mis en position assise, le volet est relevé tel que représenté sur la figure 5. Pour ce faire, l'utilisateur saisit le boudin 36 et enroule le volet autour du boudin en montant vers le haut. Au fur et à mesure que le volet est enroulé vers le haut des fenêtres, les bandes auto-agrippantes à double face 38 et 40 se fixent l'une à l'autre puisque la face arrière vient s'accrocher sur la face avant. Lorsque le volet a été entièrement enroulé, il forme un cylindre 42 d'un diamètre compris entre 3 cm et 5 cm. Ce cylindre dont le coeur est le boudin en matériau élastomère 36 se trouve à la hauteur du buste du bébé lorsque ce dernier est en position assise. Ainsi, le corps du bébé est légèrement repoussé vers l'arrière, ce qui empêche le bébé de pouvoir basculer en dehors du berceau. A noter que le cylindre 42 empêchant le bébé de basculer en avant pourrait être un cylindre élastique, par exemple en matériau élastomère, indépendant du volet et être fixé à demeure au cadre 12.

Deux sangles 44 et 46 sont fixées sur le cadre 12. Ces sangles sont destinées à s'accrocher l'une à l'autre dans le dos du bébé lorsque celui-ci est en position assise de manière à le maintenir vers l'avant contre le cylindre élastique 42. De préférence, les sangles 44 et 46 sont des bandes auto-agrippantes du genre Velcro au moins à leurs extrémités, l'une étant du type « crochet» sur sa face extérieure alors que l'autre est du type « velours » sur sa face intérieure ou inversement.

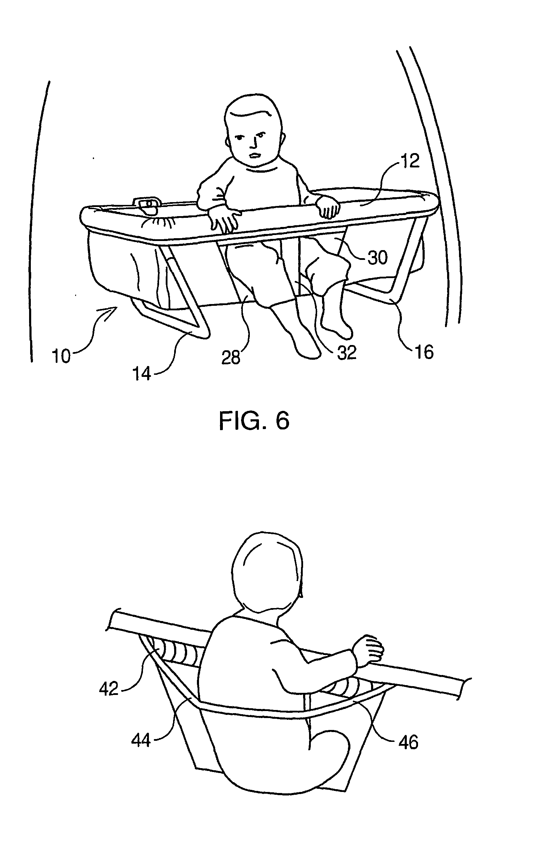

Lorsque le bébé est assis dans le berceau comme illustré sur la figure 6, il est retenu vers l'avant et vers l'arrière et se trouve assis confortablement sans risque de tomber. La figure 7 montre le bébé assis vu de l'arrière. Comme on le voit sur cette figure, il est retenu vers l'avant grâce au cylindre 42 dont l'intérieur est en matériau élastomère et retenu vers l'arrière grâce aux sangles 44 et 46 fixées l'une à l'autre dans le dos du bébé.

Bien que l'invention a été décrite ci-dessus selon un mode de réalisation préférentiel, d'autres modes de réalisation peuvent être réalisés sans sortir du cadre de l'invention.

## Revendications

1. Berceau (10) pour cabine passagers d'un avion adapté pour un enfant de moins de 2 ans capable de se tenir assis, comprenant une armature rigide et repliable formée d'un cadre rectangulaire (12) et de deux montants (14, 16) et adaptée pour être fixée à une paroi de la cabine, et une housse (18) avec matelas fixée audit cadre rectangulaire;
ledit berceau étant **caractérisé en ce que** ladite housse comporte dans un de ses flancs longitudinaux deux fenêtres (28, 30) séparées par une bande de tissu (32) et bouchées par un volet escamotable en tissu de manière à permettre à l'enfant de se tenir assis dans le berceau en ayant les jambes à l'extérieur du berceau à travers lesdites fenêtres et de part et d'autre de ladite bande de tissu lorsque ledit volet a été escamoté.

2. Berceau (10) selon la revendication 1, dans lequel un cylindre élastique (42), d'un diamètre compris entre 3 cm et 5 cm, est fixé audit cadre rectangulaire (12) en haut desdites fenêtres (28, 30), ledit cylindre qui se trouve à la hauteur du buste du bébé lorsque ce dernier est en position assise repoussant légèrement le corps du bébé vers l'arrière et empêchant ainsi le bébé de pouvoir basculer en dehors du berceau.

3. Berceau (10) selon la revendication 2, dans lequel ledit volet escamotable est de forme rectangulaire et comporte un boudin (36) en matériau élastomère dans sa partie basse et comporte sur chacun de ses deux côtés verticaux une bande auto-agrippante (38 et 40) à double face, c'est-à-dire ayant une couche « crochet » sur la face avant et une couche « velours » sur la face arrière ou l'inverse, de manière à pouvoir enrouler ledit volet autour du boudin jusqu'en haut desdites fenêtres en accrochant au fur et à mesure la face extérieure sur la face intérieure de manière à obtenir ledit cylindre (42) empêchant le bébé de basculer en dehors du berceau.

4. Berceau (10) selon la revendication 3, dans lequel deux sangles (44 et 46) fixées sur ledit cadre rectangulaire (12) sont destinées à s'accrocher l'une à l'autre dans le dos du bébé lorsque celui-ci est en position assise de manière à le maintenir vers l'avant contre le cylindre élastique (42).

5. Berceau (10) selon la revendication 4, dans lequel lesdites sangles (44 et 46) sont des bandes auto-agrippantes au moins à leurs extrémités, l'une étant du type « crochet» sur sa face extérieure alors que l'autre est du type « velours » sur sa face intérieure ou inversement de manière à s'accrocher l'une à l'autre dans le dos du bébé lorsque celui-ci est en position assise.

6. Berceau (10) selon l'une des revendications 1 à 5, dans lequel lesdites fenêtres (28, 30) sont en forme de trapèze, la base la plus étroite étant dans la partie basse, de manière à ce que les jambes du bébé soient retenues latéralement tout en ayant la possibilité de bouger.

7. Berceau (10) selon l'une des revendications 1 à 6, dans lequel ledit volet est en tulle, ce qui permet à la maman du bébé de pouvoir observer le bébé couché dans le berceau se trouvant devant ses yeux.

## Claims

1. Cradle (10) for a passenger cabin of an aircraft, suitable for a child less than 2 years old capable of sitting upright, comprising a rigid and foldable structure formed by a rectangular frame (12) and two uprights (14, 16), designed to be fixed to one wall of the cabin, and a cover (18) with mattress attached to said rectangular frame;
said cradle being **characterized in that** said cover comprises in one of its longitudinal sides two windows (28, 30) separated by a strip of fabric (32) and closed by a retractable fabric flap in such a way that the child is able to sit upright in the cradle with his or her legs passing out of the cradle, through said windows, and on either side of the fabric strip, when the flap has been retracted.

2. The cradle (10) according to Claim 1, wherein an elastic cylinder (42), with a diameter of 3 to 5 cm, is attached to said rectangular frame (12) on top of said windows (28, 30), said cylinder at chest-level of the child when the latter is sitting upright, slightly pushing back the child's body, thus preventing the child from toppling out of the cradle.

3. The cradle (10) according to Claim 2, wherein said retractable flap has a rectangular shape and comprises piping (36) of rubber material at the base, and comprises on each of the vertical sides a double-sided, auto-fastening strip (38 and 40), that is, with one "hook-side" on the front and one "loop-side" on the back or vice versa, so as to be able to roll said flap, around the piping, up to the top of said windows, while fastening together the inside and outside of the strips so as to obtain said cylinder (42) that prevents the child from toppling out of the cradle.

4. The cradle (10) according to Claim 3, wherein two straps (44 and 46) attached to said rectangular frame (12) are designed to fasten together in back of the child when the latter is sitting upright, in view of supporting the child forwards against the elastic cylinder.

5. The cradle (10) according to Claim 4, wherein said straps (44 and 46) are auto-fastening strips on at least each of their tips, one of them being of the type "hook" on the outside, while the other is of the type "loop" on the inside or conversely, in view of fastening together in back of the child when the latter is sitting upright.

6. The cradle (10) according to any one of Claims 1 to 5, wherein said windows (28, 30) are in the shape of a trapeze, the narrowest base of the trapeze being at the lower end, so that the legs of the child are supported laterally while still able to move.

7. The cradle (10) according to any one of Claims 1 to 6,
wherein said flap is made of tulle, which allows the mother of the child to watch her child lying down in the cradle, placed within her line of vision.

## Patentansprüche

1. Wiege (10) für den Passagierraum eines Flugzeugs, die für ein weniger als 2 Jahre altes Kind geeignet ist, das sitzen kann, mit einem steifen und faltbaren Gestell, das von einem rechtwinkligen Rahmen (12) und von zwei Pfosten (14, 16) gebildet wird und geeignet ist, um an einer Wand der Kabine befestigt zu werden, und mit einem Bezug (18) mit Matratze, der am rechtwinkligen Rahmen befestigt ist;
wobei die Wiege **dadurch gekennzeichnet ist, dass** der Bezug in einer seiner Längsflanken zwei Fenster (28, 30) aufweist, die von einem Stoffband (32) getrennt und von einer wegklappbaren Blende aus Stoff verschlossen werden, um es dem Kind zu erlauben, in der Wiege zu sitzen, indem seine Beine auf beiden Seiten des Stoffbands durch die Fenster hindurch gesteckt sind, wenn die Blende weggeklappt wurde.

2. Wiege (10) nach Anspruch 1, bei der ein elastischer Zylinder (42) mit einem Durchmesser von zwischen 3 cm und 5 cm am rechtwinkligen Rahmen (12) im oberen Bereich der Fenster (28, 30) befestigt ist, wobei der Zylinder, der sich in Höhe der Brust des Babys befindet, wenn letzteres in der Sitzposition ist, den Körper des Babys leicht nach hinten drückt und so das Baby daran hindert, aus der Wiege kippen zu können.

3. Wiege (10) nach Anspruch 2, bei der die wegklappbare Blende von rechtwinkliger Form ist und in ihrem unteren Teil einen Wulst (36) aus Elastomermaterial und auf jeder ihrer zwei senkrechten Seiten ein Klettverschlussband (38 und 40) aufweist, d.h. das eine "Haken"-Fläche auf der Vorderseite und eine "Flausch"-Fläche auf der Rückseite oder umgekehrt hat, um die Blende um den Wulst bis in den oberen Bereich der Fenster aufwickeln zu können, indem nach und nach die Außenfläche an der Innenfläche befestigt wird, um den Zylinder (42) zu erhalten, der das Baby daran hindert, aus der Wiege zu kippen.

4. Wiege (10) nach Anspruch 3, bei der zwei Gurte (44 und 46), die am rechtwinkligen Rahmen (12) befestigt sind, dazu bestimmt sind, im Rücken des Babys aneinander befestigt zu werden, wenn dieses in der Sitzposition ist, um es nach vorne gegen den elastischen Zylinder (42) zu halten.

5. Wiege (10) nach Anspruch 4, bei der die Gurte (44 und 46) zumindest an ihren Enden Klettverschlussbänder sind, wobei eines auf seiner Außenseite vom Typ "Haken" ist, während das andere auf seiner Innenseite vom Typ "Flausch" oder umgekehrt ist, damit sie sich im Rücken des Babys aneinander befestigen, wenn dieses in der Sitzposition ist.

6. Wiege (10) nach einem der Ansprüche 1 bis 5, bei der die Fenster (28, 30) trapezförmig sind, wobei die schmalere Basis sich im unteren Bereich befindet, damit die Beine des Babys seitlich gehalten werden und gleichzeitig die Möglichkeit haben, sich zu bewegen.

7. Wiege (10) nach einem der Ansprüche 1 bis 6, bei der die Blende aus Tüll ist, was es der Mutter des Babys erlaubt, das in der Wiege liegende Baby zu beobachten, die sich vor ihren Augen befindet.
